# EUROPÄISCHE PATENTSCHRIFT

(11) **EP 2 423 619 B1**
(45) Veröffentlichungstag und Bekanntmachung des Hinweises auf die Patenterteilung: **17.06.2015**
(21) Anmeldenummer: 11178112.6
(22) Anmeldetag: 19.08.2011
(51) Int. Cl.: F24H 9/20, A47J 31/54

(54) **Durchlauferhitzer zum Erhitzen eines Fluids und Verfahren zum Betreiben eines Durchlauferhitzers**
Water heating unit for heating a fluid and method for operating same
Chauffe-eau instantané pour le chauffage d'un fluide et procédé de fonctionnement d'un chauffe-eau instantané

(30) Priorität: 26.08.2010 DE 102010039840
(43) Veröffentlichungstag der Anmeldung: 29.02.2012
(73) Patentinhaber: Eichenauer Heizelemente GmbH & Co. KG, 76870 Kandel (DE); HE System Electronic GmbH & Co. KG, 90587 Veitsbronn (DE)
(72) Erfinder: Krieger, Jörg, 76275 Ettlingen (DE); Kürten, Bernd, 90587 Obermichelbach (DE); Schick, Christian, 67434 Neustadt / Weinstraße (DE); Spiegel, Christian, 67227 Frankenthal (DE)
(74) Vertreter: Hofstetter, Schurack & Partner

(56) Entgegenhaltungen:
- EP-A2- 1 522 247
- WO-A1-97/24052
- WO-A2-2008/099322
- DE-T2- 69 906 168

## Beschreibung

Die vorliegende Erfindung betrifft einen Durchlauferhitzer zum Erhitzen eines Fluids mit mindestens einer Heizvorrichtung, mindestens einem Durchflussrohr zum Führen des Fluids mit einem Einlauf und einem Auslauf, wobei das Durchflussrohr mit der mindestens einen Heizvorrichtung thermisch gekoppelt ist und einen Einlaufbereich, einen Mittenbereich und einen Auslaufbereich umfasst, mindestens einem ersten Temperatursensor, der im Einlaufbereich des Durchflussrohrs angeordnet ist, einer Pumpvorrichtung zum Pumpen des Fluids in das mindestens eine Durchflussrohr, und einer Steuervorrichtung, die mit der Heizvorrichtung, der Pumpvorrichtung und dem ersten Temperatursensor gekoppelt ist. Sie betrifft überdies ein entsprechendes Verfahren zum Betreiben eines derartigen Durchlauferhitzers.

Die der vorliegenden Erfindung zugrunde liegende Problematik wird am Beispiel von Kaffeemaschinen vorgestellt, wenngleich die Erfindung, wie für den Fachmann offensichtlich, auch auf anderen Gebieten eingesetzt werden kann. Unter dem Begriff Fluid, wie er im Rahmen der vorliegenden Erfindung verwendet wird, sind Medien in einem flüssigen oder dampfförmigen Aggregatszustand zu verstehen.

Aus dem Stand der Technik ist es bekannt, für Kaffeeautomaten Thermoblocks einzusetzen, die die für einen Brühvorgang benötigte Wassermenge auf einer definierten Temperatur halten. Dieses Konzept bietet den Vorteil einer sehr exakten Wassertemperatur bereits ab dem ersten Milliliter. Nachteilig sind jedoch die sehr lange Vorheizzeit beim ersten Einschalten sowie hohe Standby-Verluste. Bei einfachen Geräten ist es bekannt, lediglich die Temperatur des Heizelements über einen Bimetallschalter zu begrenzen und das Wasser schubweise bis zum Kochen zu erhitzen, wobei die Dampfblasen in Verbindung mit einer Rückflusssperre für die Pumpwirkung sorgen. Hier ergeben sich jedoch stark schwankende Wassertemperaturen in der Nähe des Siedepunkts.

Andere Konzepte mit einer Wasserpumpe sehen eine Regelung der Wassertemperatur über Tauchhülsen mit Temperaturfühlern am Ein- und Ausgang des Heizelements vor. Da hier nicht bekannt ist, welche Resttemperatur das Heizelement beim Start des Brühvorgangs hatte, kommt es besonders zu Beginn des Brühvorgangs zu starken Temperaturschwankungen. Um diese zu reduzieren, ist es bekannt, über Ventile gesteuert zu Beginn das Wasser durch das Heizelement zirkulieren zu lassen, bis die gewünschte Temperatur erreicht ist, bevor das Wasser zum Brühsystem weitergeleitet wird. Dies ist sehr aufwändig und führt zu einer Verzögerung bis zum Beginn des eigentlichen Brühvorgangs. Die Tauchhülsen werden in der Regel in Edelstahl ausgeführt, um Kalkansatz zu verringern, und sind somit kostspielig.

Die WO 2008/099322 A2 beschreibt dabei einen Durchlauferhitzer laut dem Oberbegriff des Anspruchs 1, bei dem der Erhitzungsvorgang in drei Phasen abläuft, einer Aufheizphase, in welcher die Heizvorrichtung mit maximaler Heizleistung aufgeheizt wird, einer zweiten Phase, in der die Heizvorrichtung mit einer vorgegebenen Leistung oder einer Leistung entsprechend einer vorgegebenen Kurve unabhängig von einer erfassten Temperatur angesteuert wird, und einer dritten Phase, in der eine Temperaturregelung des Wassers auf eine vorgegebene Soll-Temperatur stattfindet.

Die DE 699 06 168 T2 beschreibt eine Kaffeemaschine mit einem Wassererhitzer, dessen Temperatur auf eine Solltemperatur geregelt wird, die in Abhängigkeit einer Betriebsphase und Anfangstemperaturbedingungen des Heizkörpers gewählt wird.

Die EP 1 522 247 A2 beschreibt eine Kaffeemaschine mit einem Wassererhitzer und einer Pumpe zum Pumpen von Wasser durch den Wassererhitzer. Das Einstellen auf eine Solltemperatur erfolgt gemäß der EP 1 522 247 A2 durch eine Regelung, wobei, um das Wasser auf eine bestimmte Solltemperatur zu regeln, sowohl die Heizvorrichtung als auch die Pumpe angesteuert werden, insbesondere jeweils an- oder abgeschaltet werden, je nachdem ob die gemessene Temperatur einen jeweiligen Grenzwert über- oder unterschreitet.

Die Aufgabe der vorliegenden Erfindung besteht deshalb darin, einen gattungsgemäßen Durchlauferhitzer beziehungsweise ein gattungsgemäßes Verfahren derart weiterzubilden, dass das Fluid bei kurzer Vorheizzeit und weitgehend unabhängig von der Vorgeschichte eines aktuellen Brühvorgangs am Auslauf des Durchflussrohrs möglichst exakt mit einer vorgebbaren Temperatur bereitgestellt werden kann.

Diese Aufgabe wird gelöst durch einen Durchlauferhitzer mit den Merkmalen von Patentanspruch 1 sowie durch ein Verfahren mit den Merkmalen von Patentanspruch 15.

Die vorliegende Erfindung basiert auf der Erkenntnis, dass eine exakte Regelung der Temperatur des Fluids am Auslauf des Durchflussrohrs infolge der thermischen Trägheit des Systems nahezu unmöglich ist. Die erfolgreichen Systeme des Stands der Technik, die die Bereitstellung des Fluids am Ausgang des Durchflussrohrs mit einer vorgebbaren Temperatur weitgehend ermöglichen, nehmen daher lange Wartezeiten in Kauf, die nötig sind bis zur Einstellung eines thermischen Gleichgewichts. Ist man jedoch nicht bereit, derart lange Wartezeiten, in denen beispielsweise mittels Thermoblocks oder durch Zirkulieren innerhalb durch das Heizelement die benötigte Wassermenge auf eine definierte Temperatur gebracht wird, in Kauf zu nehmen und geht den bekannten Weg der Regelung, so entfällt zwar die lange Wartezeit, allerdings kann infolge der thermischen Trägheit der beteiligten Bauelemente, insbesondere der Heizvorrichtung sowie des Durchflussrohrs, nicht schnell genug auf eine zu hohe oder zu niedrige Temperatur des Fluids reagiert werden. Aufgrund dessen ist die Temperatur des am Auslauf des Durchflussrohrs bereitgestellten Fluids großen Schwankungen unterlegen, die unerwünscht sind.

Die vorliegende Erfindung geht deshalb den Weg, die Temperatur des Fluids am Auslauf des Durchflussrohrs anhand vorgebbarer Kennlinien zu "steuern", im Gegensatz zu "regeln". Um die geeignete Kennlinie auszuwählen, werden zumindest zwei Eingangsparameter bestimmt, wobei auf der Basis dieser zwei Eingangsparameter die variablen Parameter des Durchlauferhitzers, insbesondere die Leistungsstufe der Heizvorrichtung, eingestellt werden, um die vorgebbare Solltemperatur des Fluids am Auslauf des Durchflussrohrs zu erzielen. Je mehr Parameterwerte zu Beginn eines Brühvorgangs bestimmt werden, umso genauer lässt sich anhand der in der Steuervorrichtung abgelegten Abhängigkeiten eine vorgebbare Solltemperatur des Fluids am Auslauf des Durchflussrohrs einstellen. Um insbesondere beim Start eines Brühvorgangs die Temperaturschwankungen zu minimieren, kann vorgesehen sein, nicht nur die Heizleistung, die einer hohen Trägheit unterliegt, sondern auch die Pumpleistung zu steuern.

Unter dem Begriff "Leistungsstufe", wie er in der vorliegenden Anmeldung insbesondere im Zusammenhang mit der Heizvorrichtung und der Pumpvorrichtung verwendet wird, ist ganz allgemein eine momentan eingestellte Leistung zu verstehen, egal, ob diese stufenweise oder kontinuierlich angefahren wurde. Beide Arten der Variation sind von dem Begriff "Leistungsstufe" umfasst. Insbesondere bei einem langsamen Hochfahren der Pumpleistung ist eine kontinuierliche Leistungsänderung bevorzugt. Eine kontinuierliche Leistungsänderung erfolgt bevorzugt gemäß einer vorgebbaren Kennlinie.

In der Version mit geringst möglichem Aufwand ist daher die Steuervorrichtung erfindungsgemäß ausgelegt, vor Beginn eines Erhitzungsvorgangs folgende Werte zu ermitteln: Zunächst einen ersten Temperaturwert im Einlaufbereich des Durchflussrohrs mittels des ersten Temperatursensors bei ausgeschalteter Pumpvorrichtung und ausgeschalteter Heizvorrichtung, sowie anschließend einen zweiten Temperaturwert im Einlaufbereich des Durchflussrohrs mittels des ersten Temperatursensors bei Betrieb der Pumpvorrichtung in einer ersten vorgebbaren Leistungsstufe und bei Betrieb der Heizvorrichtung in einer ersten vorgebbaren Leistungsstufe. In der Steuervorrichtung ist die Abhängigkeit zumindest einer Solltemperatur des Fluids am Auslauf des Durchflussrohrs von zumindest dem ersten Temperaturwert, dem zweiten Temperaturwert, zumindest der ersten vorgebbaren Leistungsstufe der Pumpvorrichtung und unterschiedlichen, mit Leistungsstufen der Heizvorrichtung korrelierten Heizwerten abgelegt. Die Steuervorrichtung ist ausgelegt, die Heizvorrichtung derart anzusteuern, dass diese mit einer Leistungsstufe betrieben wird, die gemäß der abgelegten Abhängigkeit bei einer eingestellten Leistungsstufe der Pumpvorrichtung zu der Solltemperatur des Fluids am Ausgang des Durchflussrohrs führt, wobei durch die abgelegte Abhängigkeit für die zumindest eine Solltemperatur und für den ersten und zweiten ermittelten Temperaturwert festgelegt ist, mit welcher Leistungsstufe der Heizvorrichtung bei der eingestellten Leistungsstufe der Pumpvorrichtung die Heizvorrichtung zu betreiben ist.

Durch die Messung des ersten Temperaturwerts im Einlaufbereich des Durchflussrohrs bei ausgeschalteter Pumpvorrichtung und ausgeschalteter Heizvorrichtung wird berücksichtigt, dass die Heizvorrichtung vom letzten Brühvorgang noch eine höhere Temperatur als das nachströmende Medium haben kann. Auch lassen sich hierdurch unterschiedliche Umgebungstemperaturen, bei denen ein erfindungsgemäßer Durchlauferhitzer benutzt wird, berücksichtigen.

Durch die Ermittlung des zweiten Temperaturwerts im Einlaufbereich des Durchflussrohrs bei Betrieb der Pumpvorrichtung in einer ersten vorgebbaren Leistungsstufe und bei Betrieb der Heizvorrichtung in einer ersten vorgebbaren Leistungsstufe kann die Ausgangstemperatur des zu erhitzenden Fluids berücksichtigt werden. Auf der Basis der Ausgangstemperatur der Heizvorrichtung sowie der Ausgangstemperatur des zu erhitzenden Fluids und vorgegebener Solltemperatur kann nun entsprechend vorher errechneter oder experimentell bestimmtes Abhängigkeiten festgelegt werden, mit welcher Leistungsstufe die Heizvorrichtung bei der eingestellten Leistungsstufe der Pumpvorrichtung zu betreiben ist, um das Fluid am Auslauf des Durchflussrohrs mit der vorgegebenen Solltemperatur bereitzustellen. Ohne Kalibrierung der Heizvorrichtung sind den unterschiedlichen Leistungsstufen der Heizvorrichtung die unterschiedlichen Heizwerte der in der Steuervorrichtung abgelegten Abhängigkeiten fest zugeordnet.

Da erfindungsgemäß keine Regelung, sondern eine Steuerung stattfindet, beeinflussen die thermischen Trägheiten den Erhitzungsvorgang nicht mehr nachteilig. Vielmehr sind die thermischen Trägheiten in den zuvor berechneten oder experimentell ermittelten Abhängigkeiten bereits berücksichtigt. Als Folge hiervon ermöglicht ein erfindungsgemäßer Durchlauferhitzer eine Bereitstellung des Fluids am Auslauf mit einer äußerst konstanten Temperatur. Dadurch, dass kein thermisches Gleichgewicht abgewartet werden muss, wird dies bei minimalen Wartezeiten ermöglicht. Gegenüber dem Stand der Technik resultiert dies in einem deutlich geringeren Energieverbrauch. Überdies ermöglicht ein erfindungsgemäßer Durchlauferhitzer kurzfristige Änderungen der Solltemperatur, wie dies bei bestimmten Einsatzgebieten eines erfindungsgemäßen Durchlauferhitzers erwünscht ist

Eine bevorzugte Ausführungsform zeichnet sich dadurch aus, dass der Durchlauferhitzer weiterhin einen zweiten Temperatursensor umfasst, der im Mitten- oder Auslaufbereich des Durchlaufrohrs angeordnet ist. Die Steuervorrichtung kann weiterhin ausgelegt sein, vor Beginn eines Erhitzungsvorgangs und vor Ermittlung des zweiten Temperaturwerts einen dritten Temperaturwert bei ausgeschalteter Pumpvorrichtung und eingeschalteter Heizvorrichtung.zu ermitteln, insbesondere im Einlaufbereich des Durchflussrohrs mittels des ersten Temperatursensors oder im Mitten- bzw. Auslaufbereich des Durchflussrohrs mittels des zweiten Temperatursensors. Dabei kann die Steuervorrichtung ausgelegt sein, aus dem ersten Temperaturwert und dem dritten Temperaturwert eine Kalibrierung der Heizvorrichtung vorzunehmen, um den Zusammenhang zwischen vorgebbaren Leistungsstufen der Heizvorrichtung und den zugehörigen, in den Abhängigkeiten, die in der Steuervorrichtung abgelegt sind, verwendeten Heizwerten zu ermitteln.

Besonders bevorzugt ist die Steuervorrichtung in diesem Zusammenhang ausgelegt, vor Ermittlung des dritten Temperaturwerts durch entsprechende Ansteuerung der Heizvorrichtung das Durchflussrohr, bis auf eine vorgebbare Restmenge des Fluids, leerzudampfen oder das sich im Durchflussrohr befindende Fluid in einen Fluidbehälter zurückzuleiten. Um bei eingeschalteter Pumpvorrichtung eine gleichmäßige Fluidausgangstemperatur zu erreichen, muss im Durchlauferhitzer ein Temperaturgefälle zwischen dem Fluid am Einlauf (kalt) und dem Fluid am Auslauf (Solltemperatur) herrsehen. Würde zu Beginn des Aufheizvorgangs die Heizvorrichtung bereits mit dem Fluid gefüllt sein, würde zunächst das gesamte Fluid auf die Solltemperatur erhitzt werden. Würde nun die Pumpvorrichtung nach einer bestimmten Zeit bei Erreichen der Solltemperatur am Auslauf gestartet werden, würde das Fluid, das in der Nähe des Einlaufs bereits ebenfalls auf die Solltemperatur erhitzt war, beim Durchlauf durch die Heizvorrichtung weiter erhitzt werden und bis zum Fluidauslauf die Solltemperatur deutlich überschreiten. Dies wird vorliegend durch Leerdampfen des Durchflussrohrs, was sich bei Durchlauferhitzern nach Abschalten der Pumpvorrichtung am Ende jeden Brühvorgangs durch die Restwärme der Heizvorrichtung ohnehin ergibt, oder Zurückleiten des Fluids in den Fluidbehälter vermieden. Durch diese Maßnahme lässt sich überdies ermitteln, welche Leistungsstufe der Heizvorrichtung zu welchem tatsächlichen Heizwert führt. Dies berücksichtigt beispielsweise eine Verkalkung des Durchflussrohrs, die Umgebungstemperatur, unterschiedliche Versorgungsspannungen und dergleichen. In der Steuervorrichtung sind, wie bereits erwähnt, unterschiedliche, mit Leistungsstufen der Heizvorrichtung korrelierte Heizwerte abgelegt. Während ohne Kalibrierung die Heizwerte den Leistungsstufen der Heizvorrichtung unmittelbar entsprechen, wird durch die Kalibrierung der Heizvorrichtung ermöglicht zu berücksichtigen, dass sich mit den jeweiligen Leistungsstufen der Heizvorrichtung die im Idealzustand erzielbaren Heizwerte in Abhängigkeit der Gebrauchsstunden oder der Umgebungsparameter nicht erzielen lassen. Dadurch, dass in der Steuervorrichtung die tatsächlichen Heizwerte abgelegt sind, kann dies durch entsprechende Ansteuerung der Heizvorrichtung kompensiert werden. Die von der Netzspannung und anderen Toleranzen abhängige Heizleistung kann insbesondere über die zeitliche Änderung der Temperatur am zweiten Temperatursensor bei fluidlosem Durchflussrohr ermittelt werden, wenn die Wärmekapazität der Heizvorrichtung bekannt ist. Letztere ist insbesondere bei einer Serienfertigung mit definiertem Materialeinsatz bekannt.

Bevorzugt ist die Steuervorrichtung ausgelegt, aus dem ersten und dem zweiten Temperaturwert eine Kalibrierung der Pumpvorrichtung vorzunehmen, um den Zusammenhang zwischen vorgebbaren Leistungsstufen der Pumpvorrichtung und den zugehörigen Pumpwerten zu ermitteln. Die Durchflussmenge des Fluids lässt sich nämlich bestimmen aus dem Temperatursturz beim Einschalten der Pumpvorrichtung unter Berücksichtigung der Einlauf-Fluidtemperatur. Letztere stellt den Endwert des Temperatursturzes dar. Durch eine Bestimmung der Durchflussmenge ist eine genaue Kalibrierung der Pumpvorrichtung möglich. In den in der Steuervorrichtung abgelegten Abhängigkeiten sind bevorzugt die Pumpwerte angegeben, das heißt die tatsächlich erzielbaren Durchflussmengen pro Zeiteinheit. Da die Leistung der Pumpvorrichtung von der Versorgungsspannung, der Umgebungstemperatur und dergleichen abhängt, entsprechen unterschiedliche Leistungsstufen der Pumpvorrichtung bisweilen unterschiedlichen Pumpwerten. Durch eine Kalibrierung der Pumpvorrichtung lassen sich Toleranzen der Solltemperatur am Auslauf des Durchlauferhitzers infolge derartiger Schwankungen zuverlässig eliminieren. Nach Kalibrierung der Pumpvorrichtung ist die Bereitstellung einer gewünschten Menge des zu erhitzenden Fluids besonders einfach möglich, nämlich durch die Zeitdauer, in der die Pumpvorrichtung in einer vorgebbaren Leistungsstufe betrieben wird. Insbesondere kann aus der Geschwindigkeit der Temperaturänderung am Einlauf des Durchflussrohrs, der sich beim Aufheizvorgang vor dem Einschalten der Pumpvorrichtung auf einer bestimmten Temperatur befunden hat, die Fließgeschwindigkeit des Fluids bestimmt werden, wenn berücksichtigt wird, dass sich nach kurzer Zeit am ersten Temperatursensor die Temperatur des nachströmenden Fluids einstellt, da die Entwärmung von der Fluidgeschwindigkeit und Temperatur abhängt. Die Fluidmenge lässt sich dann auf einfache Weise über den Querschnitt des Durchflussrohrs berechnen.

Die Steuervorrichtung ist bevorzugt ausgelegt, mittels des zweiten Temperatursensors einen vierten Temperaturwert bei eingeschalteter Heizvorrichtung und eingeschalteter Pumpvorrichtung zu ermitteln. Besonders bevorzugt wird der vierte Temperaturwert ermittelt, wenn sofort am Auslauf eine relativ kleine Menge Fluid der Solltemperatur vorhanden sein muss. In den Fällen, in denen eine größere Menge des Fluids erhitzt werden soll und daher eine kleine Menge am Einlaufbereich noch eine niedrigere Temperatur haben kann, ist der zweite Temperatursensor nicht unbedingt erforderlich.

In Zusammenhang mit dem zweiten Temperatursensor ist es bevorzugt, wenn in der Steuervorrichtung die Abhängigkeit zumindest einer Solltemperatur des Fluids am Auslauf des Durchflussrohrs von dem ersten Temperaturwert, dem zweiten Temperaturwert, einer Vielzahl von Heizwerten, einer Vielzahl von Pumpwerten sowie dem vierten Temperaturwert abgelegt ist. Besonders bevorzugt kann die Steuervorrichtung dabei ausgelegt sein, bei Feststellung eines vierten Temperaturwerts über einem ersten vorgebbaren Schwellwert für eine vorgebbare Zeitdauer und/oder bis zum Absinken des vierten Temperaturwerts unter einen zweiten vorgebbaren Schwellwert einen niedrigeren Heizwert und/oder einen höheren Pumpwert einzustellen. Durch diese Maßnahme kann berücksichtigt werden, dass die nach dem Leerdampfen im Bereich des Fluidzulaufs verbliebene Restfluidmenge vom letzten Prüfvorgang noch eine höhere Temperatur als das dann nachströmende Fluid haben kann. Durch eine Anpassung der Heizleistung und insbesondere bei stärkeren Abweichungen durch eine Anpassung der zufließenden Fluidmenge über die Pumpvorrichtung, kann dem solange Rechnung getragen werden, bis die Heizleistung zur Fluidzulauftemperatur bei einer Nennpumpleistung passt, um Fluid der Solltemperatur am Auslauf des Durchlaufrohrs bereitzustellen.

Die Steuervorrichtung kann mindestens ein Leistungshalbleiterbauelement umfassen, wobei das mindestens eine Leistungshalbleiterbauelement thermisch mit dem Durchflussrohr gekoppelt sein kann, insbesondere auf dem Durchflussrohr angeordnet sein kann. Durch diese Maßnahme lässt sich der Wirkungsgrad eines erfindungsgemäßen Durchlauferhitzers weiter steigern, da die zur Steuerung der Leistung der Heizvorrichtung und/oder der Pumpvorrichtung benötigten Halbleiter thermisch mit dem Durchflussrohr verbunden sein können, um ihre Verlustleistung zur Beheizung des Fluids mit zu nutzen. In einer bevorzugten Ausgestaltung befindet sich das mindestens eine Leistungshalbleiterbauelement zusammen mit dem oder den Temperatursensor(en) auf einem Keramikträger, der thermisch leitend mit dem Durchflussrohr des Durchlauferhitzers gekoppelt sein kann, beispielsweise durch einen Thermoleitkleber. In diesem Falle ist es zur Erzielung einer besonders präzisen Einstellung der Solltemperatur vorteilhaft, wenn in den in der Steuervorrichtung abgelegten Abhängigkeiten die Heizleistung des mindesten einen Leistungshalbleiterbauelements berücksichtigt ist.

Gemäß einer bevorzugten Weiterbildung ist der Durchlauferhitzer mit einer Anzeigevorrichtung koppelbar, wobei die Steuervorrichtung ausgelegt ist, unter Berücksichtigung des zweiten und des dritten Temperaturwerts einen Verkalkungsgrad des Durchlaufrohrs zu ermitteln und, falls dieser einen vorgebbaren Schwellwert übersteigt, die Anzeigevorrichtung zur Abgabe eines entsprechenden Warnsignals an einen Benutzer anzusteuern. Besonders bevorzugt ist die Steuervorrichtung ausgelegt, aus der Temperatur des Durchflussrohrs bei bekanntem Heizwert, bekannter Fluidtemperatur am Einlauf und bekannter Durchflussmenge die isolierende Wirkung einer Kalkschicht auf der Innenseite des Durchflussrohrs zu ermitteln.

Der zweite Temperatursensor erlaubt überdies, eine Überhitzung aufgrund fehlenden Fluids oder zu starker Verkalkung schnell zu erkennen und die Heizvorrichtung über die Steuervorrichtung abzuschalten. Besonders vorteilhaft wird zur thermischen Absicherung weiterhin eine Temperatursicherung verwendet. Ein üblicherweise eingesetzter Bimetallschalter kann entfallen.

Gemäß einer bevorzugten Ausführungsform ist die Steuervorrichtung ausgelegt, vor dem Einschalten der Pumpvorrichtung die Heizvorrichtung gemäß einer vorgebbaren Leistungsstufe für eine vorgebbare Zeitdauer und/oder bis zur Einstellung eines vorgebbaren ersten Temperaturwerts vorzuheizen. Die Heizvorrichtung kann insbesondere so vorgeheizt werden, dass beim Starten der Pumpvorrichtung auf einer vorgebbaren Leistungsstufe das durch das Durchflussrohr strömende Fluid gerade auf die Solltemperatur aufgeheizt wird. Bevorzugt wird hier einerseits die Temperatur mittels des zweiten Temperatursensors und mittels des ersten Temperatursensors ermittelt.

Gemäß einer bevorzugten Ausführungsform sind die erwähnten Abhängigkeiten in der Steuervorrichtung insbesondere als Kennlinienfeld, als Formelzusammenhang oder als Look-Up-Tabelle abgelegt. Je mehr Parameter dabei berücksichtigt werden, umso genauer lässt sich die Heizvorrichtung und/oder Pumpvorrichtung steuern, um eine vorgebbare Solltemperatur des Fluids am Auslauf des Durchflussrohrs einzustellen.

Die unterschiedlichen Parameter für die Abhängigkeiten können ermittelt werden beispielsweise bei der Produktion der Heizvorrichtung, im Betrieb über verschiedenste Sensoren, wie zum Beispiel Temperatursensoren, Durchflussmesser, Leistungsmesser, Spannungsmesser und dergleichen. Je mehr Informationen herangezogen werden, umso genauer kann die Fluidtemperatur vorherbestimmt werden. Diese muss nicht zwangsläufig konstant sein, sondern kann bei Bedarf auch andere gewünschte Verläufe annehmen.

Gemäß einem zweiten Aspekt der vorliegenden Erfindung betrifft diese ein Haushaltskleingerät, insbesondere eine Kaffeemaschine, einen Wassererhitzer, einen Waschbecken-Durchlauferhitzer, mit einem erfindungsgemäßen Durchlauferhitzer. Insofern kann ein erfindungsgemäßer Durchlauferhitzer eingesetzt werden insbesondere bei Heißwasser- oder Dampfspendern für Kaffee, Suppen, Tee oder anderen Lebensmitteln, aber auch für andere Flüssigkeiten wie zum Beispiel Kraftstoffen, Chemikalien und dergleichen.

Weitere bevorzugte Ausführungsformen ergeben sich aus den Unteransprüchen.

Die mit Bezug auf einen erfindungsgemäßen Durchlauferhitzer vorgestellten bevorzugten Ausführungsformen und deren Vorteile gelten, soweit anwendbar, auch für das erfindungsgemäße Verfahren.

Im Nachfolgenden werden nunmehr Ausführungsbeispiele der vorliegenden Erfindung unter Bezugnahme auf die beigefügten Zeichnungen näher beschrieben. Es zeigen:
- Fig. 1: in schematischer Darstellung eine Draufsicht auf ein Ausführungsbeispiel eines erfindungsgemäßen Durchlauferhitzers;
- Fig. 2: ein Ablaufdiagramm eines Ausführungsbeispiels des erfindungsgemäßen Verfahrens; und
- Fig. 3: in schematischer Darstellung für ein Ausführungsbeispiel die Kennlinien der Pump- sowie der Heizleistung über der Zeit und der sich daraus ergebende zeitliche Verlauf der Fluid-Temperatur am Einlauf und Auslauf bzw. im Mittenbereich des Durchflussrohrs.

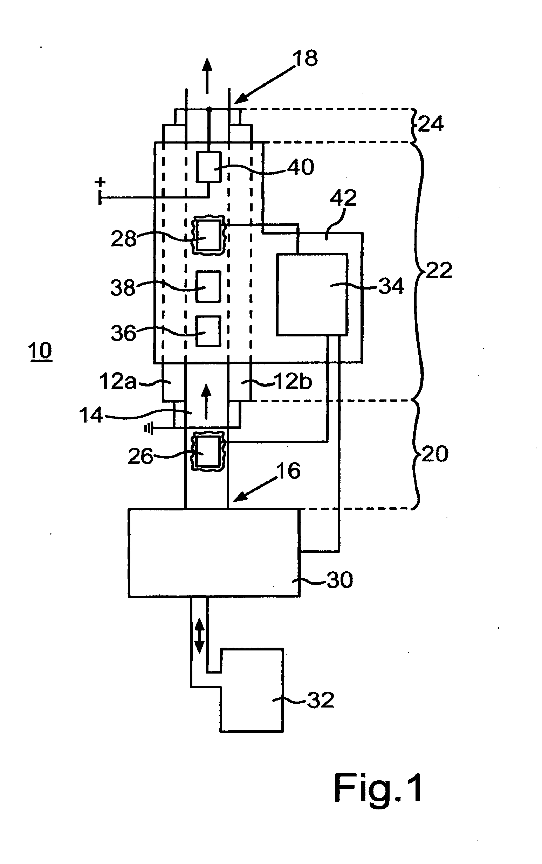

Fig. 1 zeigt in schematischer Darstellung eine Draufsicht auf ein Ausführungsbeispiel eines erfindungsgemäßen Durchlauferhitzers 10. Dieser umfasst eine Heizvorrichtung mit einem ersten 12a und einem zweiten Rohrheizkörper 12b. Mit den Rohrheizkörpern 12a, 12b ist ein Durchflussrohr 14 zum Führen eines Fluids thermisch gekoppelt. Das Fluid stellt bevorzugt Wasser dar. Das Durchflussrohr 14 weist einen Einlauf 16 sowie einen Auslauf 18 auf. Ein Einlaufbereich des Durchflussrohrs ist mit 20 bezeichnet, ein Mittenbereich mit 22 und ein Auslaufbereich mit 24. Im Einlaufbereich 20 ist ein NTC-Element 26 als Temperatursensor über eine hochwärmeleitende Keramik von außen auf das Durchflussrohr 14 montiert. Ein zweites NTC-Element 28 ist in entsprechender Weise im Mittenbereich 22 des Durchflussrohrs 14 auf dem Durchflussrohr 14 montiert.

Das zweite NTC-Element 28 könnte in anderen Ausführungsformen jedoch auch im Auslaufbereich 24 angeordnet sein. Mittels einer Pumpvorrichtung 30 kann das Fluid aus einem Fluidbehälter 32 über den Einlauf 16 des Durchflussrohrs 14 zum Erhitzen des Fluids in das Durchflussrohr 14 hineingepumpt werden. Eine Steuervorrichtung 34, die bevorzugt einen Mikrocontroller umfasst, ist mit der Pumpvorrichtung 30, dem ersten 26 und dem zweiten Temperatursensor 28 sowie zwei Leistungshalbleitern 36, 38, die insbesondere als Triac ausgeführt sein können, gekoppelt. Die Leistungshalbleiter 36, 38 dienen dazu, die Heizleistung der Rohrheizkörper 12a, 12b bzw. die Pumpleistung der Pumpvorrichtung 30 zu steuern, diese insbesondere auf vorgebbare Leistungsstufen ein- und auszuschalten. Der erfindungsgemäße Durchlauferhitzer 10 umfasst weiterhin eine Schmelzsicherung 40, die am Ende des Mittenbereichs 22 des Durchflussrohrs 14 in thermischer Kopplung mit diesem montiert ist. Die Steuervorrichtung 34 umfasst eine Software Class B gemäß IEC 60335, mit Watch-dog. Die Steuervorrichtung 34, die Leistungshalbleiter 36, 38 sowie die Schmelzsicherung 40 sind auf einer Keramikplatine 42 montiert, die ihrerseits mittels eines Wärmeleitklebers auf dem Durchflussrohr 14 montiert ist. Der Kleber selbst ist durch Siebdruck, Stempeln oder Dispensen aufgetragen und härtet nach der Montage bei Temperaturerhöhung aus. Andere Befestigungsmöglichkeiten, wie beispielsweise mittels Klemmen oder Schrauben, sind ebenfalls denkbar.

Das Durchflussrohr 14 besteht bevorzugt aus Edelstahl, während die Rohrheizkörper 12a, 12b bevorzugt einen Mantel aus Aluminium aufweisen. Besonders bevorzugt sind das Durchflussrohr 14 und die Rohrheizkörper 12a, 12b über ein Kopplungselement, beispielsweise eine Diffusionsplatte aus Aluminium, miteinander verlötet. Besonders bevorzugt ist weiterhin das Durchflussrohr 14 als Flachrohr ausgeführt, an dessen gegenüberliegenden Flachseiten die zwei Rohrheizkörper 12a, 12b in wärmeleitendem Kontakt längsseitig angelötet sind. Alternativ kann auch mindestens ein Rohrheizkörper vorgesehen sein, um den das Durchflussrohr 14 als Wendel gewunden und überdies bevorzugt mit diesem verlötet ist.

In der Steuervorrichtung 34 ist die Abhängigkeit zumindest einer Solltemperatur Tₛₒₗₗ des Fluids am Auslauf 18 des Durchflussrohrs 14 von einer Vielzahl von Parametern abgelegt. Ein erster Parameter ergibt sich durch einen ersten Temperaturwert T1, der im Einlaufbereich des Durchflussrohrs mittels des ersten Temperatursensors 26 bei ausgeschalteter Pumpvorrichtung 30 und ausgeschalteten Rohrheizkörpern 12a, 12b ermittelt wird. Ein zweiter Parameter ergibt sich als zweiter Temperaturwert T2, der im Einlaufbereich 20 des Durchflussrohrs 14 mittels des ersten Temperatursensors 26 bei Betrieb der Pumpvorrichtung 30 in einer ersten vorgebbaren Leistungsstufe und bei Betrieb der Rohrheizkörper 12a, 12b in einer ersten vorgebbaren Leistungsstufe ermittelt wird. Ein dritter Temperaturwert T3 stellt einen dritten Parameter dar, wobei der dritte Temperaturwert T3 bei ausgeschalteter Pumpvorrichtung 30 und eingeschalteten Rohrheizkörpern 12a, 12b insbesondere im Einlaufbereich 20 des Durchflussrohrs 14 mittels des ersten Temperatursensors 26 oder im Mittenbereich 22 des Durchflussrohrs 14 mittels des zweiten Temperatursensors 28 ermittelt wird.

Die Steuervorrichtung 34 ist nun ausgelegt, die Rohrheizkörper 12a, 12b und/oder die Pumpvorrichtung 30 gemäß den abgelegten Abhängigkeiten mit einer derartigen Leistungsstufe zu betreiben, dass sich im Hinblick auf die ermittelten Parameter die vorgebbare Solltemperatur Tₛₒₗₗ des Fluids am Auslauf 18 des Durchflussrohrs 14 einstellt.

Die Steuervorrichtung 34 ist weiterhin ausgelegt, aus dem ersten Temperaturwert T1 und dem dritten Temperaturwert T3 eine Kalibrierung der Rohrheizkörper 12a, 12b vorzunehmen, um den Zusammenhang zwischen vorgebbaren Leistungsstufen der Rohrheizkörper 12a, 12b und den zugehörigen tatsächlichen Heizwerten zu ermitteln. Die Steuervorrichtung 34 ist überdies ausgelegt, vor Ermittlung des dritten Temperaturwerts T3 durch entsprechende Ansteuerung der Rohrheizkörper 12a, 12b das Durchflussrohr 14 bis auf eine vorgebbare Restmenge des Fluids leerzudampfen oder das sich im Durchflussrohr 14 befindende Fluid in den Fluidbehälter 32 zurückzuleiten.

Aus dem ersten T1 und dem zweiten Temperaturwert T2 kann die Steuervorrichtung 34 eine Kalibrierung der Pumpvorrichtung 30 vornehmen, um den Zusammenhang zwischen vorgebbaren Leistungsstufen der Pumpvorrichtung 30 und den zugehörigen Pumpwerten, d.h. Durchflussmenge pro Zeiteinheit, zu ermitteln. Die Heizwerte und Pumpwerte sind die Werte, die die Basis für die in der Steuervorrichtung 34 abgelegten Abhängigkeiten bilden. Nach Kalibrierung der Rohrheizkörper 12a, 12b und/oder der Pumpvorrichtung 30 ist damit ein Zusammenhang zwischen einstellbaren Leistungsstufen der Rohrheizkörper 12a, 12b und/oder einstellbaren Leistungsstufen der Pumpvorrichtung 30 und den entsprechenden Werten in den abgelegten Abhängigkeiten gegeben. Dabei können die Abhängigkeiten insbesondere als Kennlinienfeld, als Formelzusammenhang oder als Look-Up-Tabelle abgelegt sein.

Ein vierter Temperaturwert T4 kann von der Steuervorrichtung 34 mittels des zweiten Temperatursensors 28 bei eingeschalteten Rohrheizkörpern 12a, 12b und eingeschalteter Pumpvorrichtung 30 ermittelt werden. Stellt die Steuervorrichtung 34 fest, dass der vierte Temperaturwert T4 über einem vorgebbaren Schwellwert liegt, so kann sie für eine vorgebbare Zeitdauer und/oder bis zum Absinken des vierten Temperaturwerts T4 unter einen zweiten vorgebbaren Schwellwert einen niedrigeren Heizwert und/oder einen höheren Pumpwert einstellen.

Insbesondere unter Berücksichtigung des zweiten T2 und des dritten Temperaturwerts T3 kann die Steuervorrichtung 34 einen Verkalkungsgrad des Durchlaufrohrs 14 ermitteln. Sofern dieser einen vorgebbaren Schwellwert übersteigt, kann dieser auf einer nicht dargestellten Anzeigevorrichtung in Form eines entsprechenden Warnsignals an einen Benutzer zur Anzeige gebracht werden.

Wird ein erfindungsgemäßer Durchlauferhitzer in einem Haushaltskleingerät, beispielsweise einer Kaffeemaschine eingesetzt, so können sich nach dem Auslauf 18 weitere Geräteteile anschließen, beispielsweise ein Schlauch, die von dem Fluid durchströmt werden, bevor das Fluid auf dem Kaffeepulver auftrifft. Soll das Fluid mit einer vorgebbaren Temperatur auf dem Kaffeepulver auftreffen, so kann durch Wahl einer entsprechend höheren Solltemperatur Tₛₒₗₗ die Abkühlung durch die sich an den Auslauf 18 anschließenden Geräteteile auf einfache Weise berücksichtigt werden. Insbesondere kann die zunehmende Erwärmung dieser Geräteteile durch entsprechende Steuerung der Heiz- und/oder Pumpleistung berücksichtigt werden.

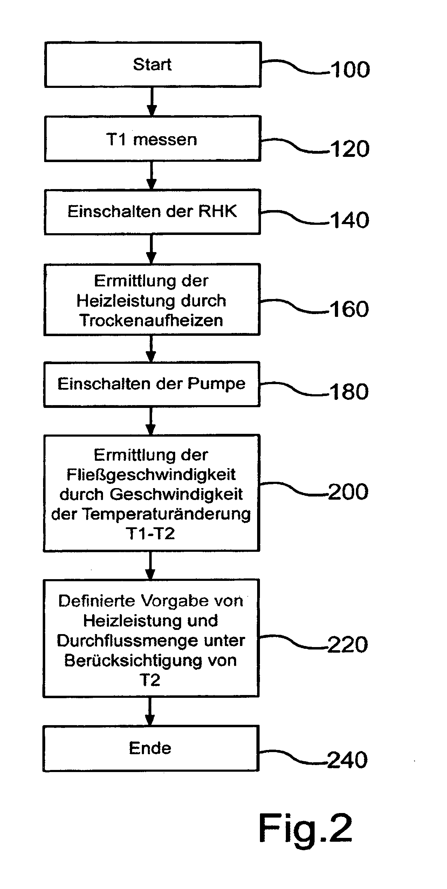

Fig. 2 zeigt in schematischer Darstellung einen Ablaufplan für ein Ausführungsbeispiel des erfindungsgemäßen Verfahrens. Dieses startet im Schritt 100. Dabei wird zunächst ein erster Temperaturwert T1 im Einlaufbereich des Durchflussrohrs 14 mittels des ersten Temperatursensors 26 bei ausgeschalteter Pumpvorrichtung 30 und ausgeschalteten Rohrheizkörpern 12a, 12b gemessen. Anschließend werden im Schritt 140 die Rohrheizkörper 12a, 12b eingeschaltet. Im Schritt 160 wird die Heizleistung durch Trockenaufheizen ermittelt. Es findet demnach eine Kalibrierung zwischen vorgebbaren Leistungsstufen der Rohrheizkörper 12a, 12b und den tatsächlich erzielbaren Heizwerten statt. Dazu wird ein dritter Temperaturwert T3, insbesondere im Einlaufbereich 20 des Durchflussrohrs 14 mittels des ersten Temperatursensors 26 oder im Mittenbereich 22 des Durchflussrohrs 14 mittels des zweiten Temperatursensors 28 ermittelt, wobei die Steuervorrichtung 34 ausgelegt ist, aus dem ersten Temperaturwert T1 und dem dritten Temperaturwert T3 zur Kalibrierung der Rohrheizkörper 12a, 12b den Zusammenhang zwischen vorgebbaren Leistungsstufen der Rohrheizkörper 12a, 12b und den zugehörigen Heizwerten zu ermitteln.

Anschließend wird im Schritt 180 die Pumpvorrichtung 30 eingeschaltet. Im Schritt 200 wird die Fließgeschwindigkeit des Fluids ermittelt aus der Differenz des ersten Temperaturwerts T1 und eines zweiten Temperaturwerts T2, wobei der zweiten Temperaturwert T2 im Einlaufbereich 20 des Durchflussrohrs 14 mittels des ersten Temperatursensors 26 nach Einschalten der Pumpvorrichtung 30 und Betrieb der Rohrheizkörper 12a, 12b, insbesondere nach einer vorgebbaren Wartezeit, gemessen wird.

Im Schritt 220 wird nunmehr unter Berücksichtigung des zweiten Temperaturwerts T2 eine Heizleistung und eine Pumpleistung, das heißt eine Durchflussmenge, definiert vorgegeben, um eine Solltemperatur Tₛₒₗₗ einzustellen. Sobald die vorgegebene Durchflussmenge, beispielsweise für einen bestimmten Brühvorgang, den Auslauf 18 des Durchflussrohrs 14 passiert hat, endet das Verfahren im Schritt 240.

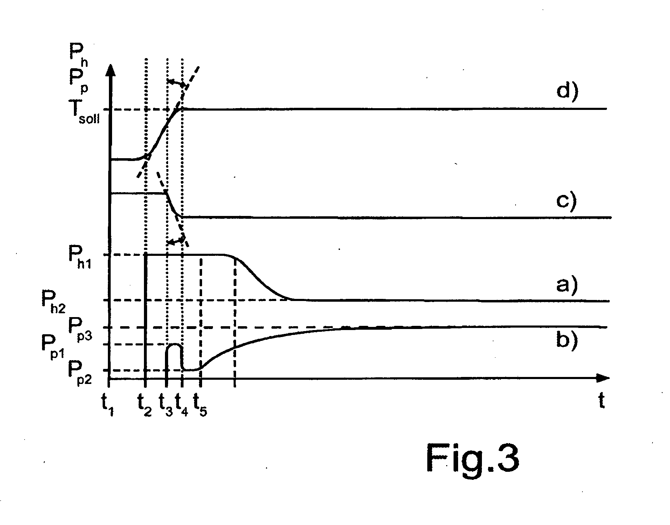

Fig. 3 zeigt in schematischer Darstellung zunächst den Verlauf der Heizleistung (Kurvenzug a)) sowie der Pumpleistung (Kurvenzug b)) über der Zeit t. Für die Darstellung von Fig. 3 wird angenommen, dass der zweite Temperatursensor 28 im Auslaufbereich 24 des Durchflussrohrs 14 angeordnet ist. Korrespondierend dazu sind die Temperaturverläufe des Fluids im Einlaufbereich 20 (Kurvenzug c)) sowie im Auslaufbereich 24 (Kurvenzug d)) des Durchflussrohrs 14 eingezeichnet. Zum Zeitpunkt t₁ sind sowohl die Heizkörper 12a, 12b als auch die Pumpvorrichtung 30 ausgeschaltet. Zum Zeitpunkt t₂ werden die Rohrheizkörper 12a, 12b mit einer ersten Heizleistung Pₕ₁ betrieben, während die Pumpvorrichtung 30 noch ausgeschaltet bleibt. Dadurch werden die Rohrheizkörper 12a, 12b vorgeheizt. Die Temperatur im Auslaufbereich 24 des Durchflussrohrs 14 steigt kontinuierlich an. Die Temperatur im Einlaufbereich 16, der außerhalb des Bereichs der Rohrheizkörper 12a, 12b liegt, bleibt konstant.

Zum Zeitpunkt t₃ werden die Rohrheizkörper 12a, 12b weiterhin mit der Heizleistung Pₕ₁ betrieben. Allerdings wird zum Zeitpunkt t₃ nunmehr auch die Pumpvorrichtung 30 aktiviert. Sie wird insbesondere mit der Pumpleistung Pₚ₁ betrieben. Durch das einströmende Fluid sinkt die Temperatur im Einlaufbereich auf die Fluidtemperatur ab, siehe Kurvenzug c). Da das Fluid jedoch infolge der aktivierten Pumpvorrichtung 30 das Durchflussrohr 14 durchströmt und dabei infolge der aktivierten Rohrheizkörper 12a, 12b beheizt wird, nimmt die Temperatur des Fluids im Auslaufbereich 24 zu, siehe Kurvenzug d).

Zum Zeitpunkt t4 werden die Rohrheizkörper 12a, 12b zunächst weiterhin mit der Heizleistung Pₕ₁ betrieben. Allerdings wird die Pumpleistung auf Pₚ₂ abgesenkt. Dadurch wird eine Stabilisierung der Temperaturen im Einlaufbereich 20 und im Auslaufbereich 24 erreicht. Zum Zeitpunkt t₅ wird die Pumpleistung allmählich, d.h. kontinuierlich, wieder erhöht, und zwar schließlich auf den Wert Pₚ₃, der größer ist als der Wert Pₚ₁. Die Heizleistung wird zum Zeitpunkt t₆ allmählich, d.h. kontinuierlich, auf den Wert Pₕ₂ abgesenkt.

Wie sich aus dem zeitlichen Verlauf der Temperatur des Fluids im Einlaufbereich 20 sowie im Auslaufbereich 24 ergibt, wird durch das Zusammenspiel der zeitlichen Abfolge unterschiedlicher Heiz- und Pumpleistungen ermöglicht, das Fluid mit der Solltemperatur Tₛₒₗₗ ab dem Zeitpunkt t₄ am Auslauf des Durchflussrohrs 14 bereitzustellen. Würde man in die Figur 3 noch den zeitlichen Verlauf der am Auslauf 18 austretenden Fluidmenge einzeichnen, so würde dieser erst im Zeitpunkt t₄ beginnen. Mit anderen Worten wird durch die vorliegende Erfindung ermöglicht, ohne Temperaturschwankungen ab einem bestimmten Zeitpunkt Fluid mit einer Solltemperatur Tₛₒₗₗ am Auslauf 18 des Durchflussrohrs 14 bereitzustellen.

Die Steigung der Temperatur im Auslaufbereich 24 zwischen den Zeitpunkten t₂ und t₄, siehe Kurvenzug d), stellt ein Maß für die Heizleistung der Rohrheizkörper 12a, 12b dar. Aus einem gewünschten Temperaturverlauf kann daher auf die dazu nötige Heizleistung rückgeschlossen werden, beispielsweise durch Differentiation.

Das Abfallen der Temperatur im Einlaufbereich 20 zwischen den Zeitpunkten t₃ und t₄, siehe Kurvenzug c), stellt ein Maß für die Pumpleistung der Pumpvorrichtung 30 dar. Aus einem gewünschten Temperaturverlauf kann daher auf die dazu nötige Pumpleistung rückgeschlossen werden.

## Patentansprüche

1. Durchlauferhitzer zum Erhitzen eines Fluids mit
- mindestens einer Heizvorrichtung (12a, 12b);
- mindestens einem Durchflussrohr (14) zum Führen des Fluids mit einem Einlauf (16) und einem Auslauf (18), wobei das Durchflussrohr (14) mit der mindestens einen Heizvorrichtung (12a, 12b) thermisch gekoppelt ist und einen Einlaufbereich (20), einen Mittenbereich (22) und einen Auslaufbereich (24) umfasst;
- mindestens einem ersten Temperatursensor (26), der im Einlaufbereich (20) des Durchflussrohrs (14) angeordnet ist;
- einer Pumpvorrichtung (30) zum Pumpen des Fluids in das mindestens eine Durchflussrohr (14); und
- einer Steuervorrichtung (34), die mit der Heizvorrichtung (12a, 12b), der Pumpvorrichtung (30) und dem ersten Temperatursensor (26) gekoppelt ist;
**dadurch gekennzeichnet,**
**dass** die Steuervorrichtung (34) ausgelegt ist vor Beginn eines Erhitzungsvorgangs folgende Werte zu ermitteln:
- einen ersten Temperaturwert (T1) im Einlaufbereich (20) des Durchflussrohrs (14) mittels des ersten Temperatursensors (26) bei ausgeschalteter Pumpvorrichtung (30) und ausgeschalteter Heizvorrichtung (12a, 12b); und
- einen zweiten Temperaturwert (T2) im Einlaufbereich (20) des Durchflussrohrs (14) mittels des ersten Temperatursensors (26) bei Betrieb der Pumpvorrichtung (30) in einer ersten vorgebbaren Leistungsstufe und bei Betrieb der Heizvorrichtung (12a, 12b) in einer ersten vorgebbaren Leistungsstufe;
wobei in der Steuervorrichtung (34) die Abhängigkeit zumindest einer Solltemperatur (Tₛₒₗₗ) des Fluids am Auslauf (18) des Durchflussrohrs (14) von zumindest dem ersten Temperaturwert (T1), dem zweiten Temperaturwert (T2), zumindest der ersten vorgebbaren Leistungsstufe der Pumpvorrichtung (30) und unterschiedlichen, mit Leistungsstufen der Heizvorrichtung (12a, 12b) korrelierten Heizwerten abgelegt ist,
wobei die Steuervorrichtung (34) ausgelegt ist, die Heizvorrichtung (12a, 12b) derart anzusteuern, dass diese mit einer Leistungsstufe betrieben wird, die gemäß der abgelegten Abhängigkeit bei einer eingestellten Leistungsstufe der Pumpvorrichtung (30) zu der Solltemperatur (Tₛₒₗₗ) des Fluids am Ausgang des Durchflussrohrs (14) führt, wobei durch die abgelegte Abhängigkeit für die zumindest eine Solltemperatur (Tₛₒₗₗ) und für den ersten und zweiten ermittelten Temperaturwert (T1; T2) festgelegt ist, mit welcher Leistungsstufe der Heizvorrichtung (12a, 12b) bei der eingestellten Leistungsstufe der Pumpvorrichtung (30) die Heizvorrichtung (12a, 12b) zu betreiben ist.

2. Durchlauferhitzer nach Anspruch 1,
**dadurch gekennzeichnet,**
**dass** der Durchlauferhitzer weiterhin einen zweiten Temperatursensor (28) umfasst, der im Mitten- oder Auslaufbereich des Durchlaufrohrs (14) angeordnet ist.

3. Durchlauferhitzer nach einem der Ansprüche 1 oder 2,
**dadurch gekennzeichnet,**
**dass** die Steuervorrichtung (34) weiterhin ausgelegt ist, vor Beginn eines Erhitzungsvorgangs und vor Ermittlung des zweiten Temperaturwerts (T2) folgenden Wert zu ermitteln:
- einen dritten Temperaturwert (T3), insbesondere im Einlaufbereich (20) des Durchflussrohrs (14) mittels des ersten Temperatursensors (26) oder im Mittenoder Auslaufbereich des Durchflussrohrs (14) mittels des zweiten Temperatursensors (28), bei ausgeschalteter Pumpvorrichtung (30) und eingeschalteter Heizvorrichtung (12a, 12b);
wobei die Steuervorrichtung (34) ausgelegt ist, aus dem ersten Temperaturwert (T1) und dem dritten Temperaturwert (T3) eine Kalibrierung der Heizvorrichtung (12a, 12b) vorzunehmen, um den Zusammenhang zwischen vorgebbaren Leistungsstufen der Heizvorrichtung (12a, 12b) und den zugehörigen Heizwerten zu ermitteln.

4. Durchlauferhitzer nach Anspruch 3,
**dadurch gekennzeichnet,**
**dass** die Steuervorrichtung (34) ausgelegt ist, vor Ermittlung des dritten Temperaturwerts (T3) durch entsprechende Ansteuerung der Heizvorrichtung (12a, 12b) das Durchflussrohr (14), bis auf eine vorgebbare Restmenge des Fluids, leer zu dampfen oder das sich im Durchflussrohr (14) befindende Fluid in einen Fluidbehälter (32) zurückzuleiten.

5. Durchlauferhitzer nach einem der vorhergehenden Ansprüche,
**dadurch gekennzeichnet,**
**dass** die Steuervorrichtung (34) ausgelegt ist, aus dem ersten (T1) und dem zweiten Temperaturwert (T2) eine Kalibrierung der Pumpvorrichtung (30) vorzunehmen, um den Zusammenhang zwischen vorgebbaren Leistungsstufen der Pumpvorrichtung (30) und den zugehörigen Pumpwerten zu ermitteln.

6. Durchlauferhitzer nach einem der Ansprüche 2 bis 5,
**dadurch gekennzeichnet,**
**dass** die Steuervorrichtung (34) ausgelegt ist, mittels des zweiten Temperatursensors (28) einen vierten Temperaturwert (T4) bei eingeschalteter Heizvorrichtung (12a, 12b) und eingeschalteter Pumpvorrichtung (30) zu ermitteln.

7. Durchlauferhitzer nach Anspruch 6,
**dadurch gekennzeichnet,**
**dass** in der Steuervorrichtung (34) die Abhängigkeit zumindest einer Solltemperatur (Tₛₒₗₗ) des Fluids am Auslauf (18) des Durchflussrohrs (14) von dem ersten Temperaturwert (T1), dem zweiten Temperaturwert (T2), einer Vielzahl von Heizwerten, einer Vielzahl von Pumpwerten sowie dem vierten Temperaturwert (T4) abgelegt ist.

8. Durchlauferhitzer nach Anspruch 7,
**dadurch gekennzeichnet,**
**dass** die Steuervorrichtung (34) ausgelegt ist, bei Feststellung eines vierten Temperaturwerts (T4) über einem ersten vorgebbaren Schwellwert für eine vorgebbare Zeitdauer und/oder bis zum Absinken des vierten Temperaturwerts (T4) unter einen zweiten vorgebbaren Schwellwert einen niedrigeren Heizwert und/oder einen höheren Pumpwert einzustellen.

9. Durchlauferhitzer nach einem der vorhergehenden Ansprüche,
**dadurch gekennzeichnet,**
**dass** die Steuervorrichtung (34) mindestens ein Leistungshalbleiterbauelement (36, 38) umfasst, wobei das mindestens eine Leistungshalbleiterbauelement (36, 38) thermisch mit dem Durchflussrohr (14) gekoppelt ist, insbesondere auf dem Durchflussrohr (14) angeordnet ist.

10. Durchlauferhitzer nach Anspruch 9,
**dadurch gekennzeichnet,**
**dass** in den in der Steuervorrichtung (34) abgelegten Abhängigkeiten die Heizleistung des mindestens einen Leistungshalbleiterbauelements (36, 38) berücksichtigt ist.

11. Durchlauferhitzer nach einem der Ansprüche 3 bis 10,
**dadurch gekennzeichnet,**
**dass** der Durchlauferhitzer mit einer Anzeigevorrichtung koppelbar ist, wobei die Steuervorrichtung (34) ausgelegt ist, unter Berücksichtigung des zweiten (T2) und des dritten Temperaturwerts (T3) einen Verkalkungsgrad des Durchlaufrohrs (14) zu ermitteln und, falls dieser einen vorgebbaren Schwellwert übersteigt, die Anzeigevorrichtung zur Abgabe eines entsprechenden Warnsignals an einen Benutzer anzusteuern.

12. Durchlauferhitzer nach einem der vorhergehenden Ansprüche,
**dadurch gekennzeichnet,**
**dass** die Steuervorrichtung (34) ausgelegt ist, vor dem Einschalten der Pumpvorrichtung (30) die Heizvorrichtung (12a, 12b) gemäß einer vorgebbaren Leistungsstufe für eine vorgebbare Zeitdauer und/oder bis zur Einstellung eines vorgebbaren ersten Temperaturwerts (T1) vorzuheizen.

13. Durchlauferhitzer nach einem der vorhergehenden Ansprüche,
**dadurch gekennzeichnet,**
**dass** die Abhängigkeiten in der Steuervorrichtung (34) als Kennlinienfeld, als Formelzusammenhang oder als Look-Up-Tabelle abgelegt sind.

14. Haushaltskleingerät, insbesondere Kaffeemaschine, Wassererhitzer, Waschbecken-Durchlauferhitzer, mit einem Durchlauferhitzer nach einem der vorhergehenden Ansprüche.

15. Verfahren zum Betreiben eines Durchlauferhitzers zum Erhitzen eines Fluids mit mindestens einer Heizvorrichtung (12a, 12b); mindestens einem Durchflussrohr (14) zum Führen des Fluids mit einem Einlauf (16) und einem Auslauf (18), wobei das Durchflussrohr (14) mit der mindestens einen Heizvorrichtung (12a, 12b) thermisch gekoppelt ist und einen Einlaufbereich (20), einen Mittenbereich (22) und einen Auslaufbereich (24) umfasst; mindestens einem ersten Temperatursensor (26), der im Einlaufbereich (20) des Durchflussrohrs (14) angeordnet ist; einer Pumpvorrichtung (30) zum Pumpen des Fluids in das mindestens eine Durchflussrohr (14); und einer Steuervorrichtung (34), die mit der Heizvorrichtung (12a, 12b), der Pumpvorrichtung (30) und dem ersten Temperatursensor (26) gekoppelt ist;
folgende Schritte umfassend:
a) Ermitteln eines ersten Temperaturwerts (T1) im Einlaufbereich (20) des Durchflussrohrs (14) mittels des ersten Temperatursensors (26) bei ausgeschalteter Pumpvorrichtung (30) und ausgeschalteter Heizvorrichtung (12a, 12b);
b) Ermitteln eines zweiten Temperaturwerts (T2) im Einlaufbereich (20) des Durchflussrohrs (14) mittels des ersten Temperatursensors (26) bei Betrieb der Pumpvorrichtung (30) in einer ersten vorgebbaren Leistungsstufe und bei Betrieb der Heizvorrichtung (12a, 12b) in einer ersten vorgebbaren Leistungsstufe; und
c) Ansteuern der Heizvorrichtung (12a, 12b) derart, dass diese gemäß einer in der Steuervorrichtung (34) abgelegten Abhängigkeit zumindest einer Solltemperatur (Tₛₒₗₗ) des Fluids am Auslauf (18) des Durchflussrohrs (14) von zumindest dem ersten und zweiten ermittelten Temperaturwert (T1; T2), zumindest der ersten vorgebbaren Leistungsstufe der Pumpvorrichtung (30) und unterschiedlichen, mit Leistungsstufen der Heizvorrichtung (12a, 12b) korrelierten Heizwerten, mit einer Leistungsstufe betrieben wird, die gemäß der abgelegten Abhängigkeit bei der eingestellten Leistungsstufe der Pumpvorrichtung (30) zu der Solltemperatur (Tₛₒₗₗ) des Fluids am Ausgang des Durchflussrohrs (14) führt, wobei durch die abgelegte Abhängigkeit für die zumindest eine Solltemperatur (Tₛₒₗₗ) und für eine ermittelte erste und zweite Temperatur (T1; T2) festgelegt ist, mit welcher Leistungsstufe der Heizvorrichtung (12a; 12b) bei der eingestellter Leistungsstufe der Pumpvorrichtung (30) die Heizvorrichtung (12a; 12b) zu betreiben ist.

## Claims

1. Flow-type heater for heating a fluid, comprising
- at least one heating device (12a, 12b);
- at least one flow pipe (14) for guiding the fluid with an inflow (16) and an outflow (18), wherein the flow pipe (14) is thermally coupled to the at least one heating device (12a, 12b) and includes an inflow area (20), a center area (22) and an outflow area (24);
- at least a first temperature sensor (26) disposed in the inflow area (20) of the flow pipe (14);
- a pumping device (30) for pumping the fluid into the at least one flow pipe (14); and
- a control device (34) coupled to the heating device (12a, 12b), the pumping device (30) and the first temperature sensor (26);
**characterized in that**
the control device (34) is adapted to determine the following values before the beginning of a heating operation:
- a first temperature value (T1) in the inflow area (20) of the flow pipe (14) by means of the first temperature sensor (26) with the pumping device (30) turned off and the heating device (12a, 12b) turned off; and
- a second temperature value (T2) in the inflow area (20) of the flow pipe (14) by means of the first temperature sensor (26) in the operation of the pumping device (30) in a first presettable power stage and in the operation of the heating device (12a, 12b) in a first presettable power stage;
wherein the dependency at least of a set temperature (Tₛₒₗₗ) of the fluid at the outflow (18) of the flow pipe (14) on at least the first temperature value (T1), the second temperature value (T2), at least the first presettable power stage of the pumping device (30) and different heating values correlated with power stages of the heating device (12a, 12b) is stored in the control device (34), wherein the control device (34) is adapted to control the heating device (12a, 12b) such that it is operated with a power stage, which results in the set temperature (Tₛₒₗₗ) of the fluid at the outlet of the flow pipe (14) at an adjusted power stage of the pumping device (30) according to the stored dependency, wherein by the stored dependency for the at least one set temperature (Tₛₒₗₗ) and for the first and the second determined temperature value (T1; T2) it is determined, with which power stage the heating device (12a, 12b) is to be operated at the adjusted power stage of the pumping device (30).

2. Flow-type heater according to claim 1,
**characterized in that**
the flow-type heater further includes a second temperature sensor (28) disposed in the center or outflow area of the flow pipe (14).

3. Flow-type heater according to any one of claims 1 or 2,
**characterized in that**
the control device (34) is further adapted to determine the following value before the beginning of a heating operation and before determining the second temperature value (T2):
- a third temperature value (T3), in particular in the inflow area (20) of the flow pipe (14) by means of the first temperature sensor (26) or in the center or outflow area of the flow pipe (14) by means of the second temperature sensor (28) with the pumping device (30) turned off and the heating device (12a, 12b) turned on;
wherein the control device (34) is adapted to perform a calibration of the heating device (12a, 12b) from the first temperature value (T1) and the third temperature value (T3) to determine the association between presettable power stages of the heating device (12a, 12b) and the associated heating values.

4. Flow-type heater according to claim 3,
**characterized in that**
the control device (34) is adapted to evaporate the flow pipe (14) to the empty state except for a presettable residual amount of the fluid by corresponding control of the heating device (12a, 12b) or to return the fluid located in the flow pipe (14) into a fluid container (32) before determining the third temperature value (T3).

5. Flow-type heater according to any one of the preceding claims,
**characterized in that**
the control device (34) is adapted to perform a calibration of the pumping device (30) from the first (T1) and the second temperature value (T2) to determine the association between presettable power stages of the pumping device (30) and the associated pumping values.

6. Flow-type heater according to any one of claims 2 to 5,
**characterized in that**
the control device (34) is adapted to determine a fourth temperature value (T4) by means of the second temperature sensor (28) with the heating device (12a, 12b) turned on and the pumping device (30) turned on.

7. Flow-type heater according to claim 6,
**characterized in that**
the dependency of at least a set temperature (Tₛₒₗₗ) of the fluid at the outflow (18) of the flow pipe (14) on the first temperature value (T1), the second temperature value (T2), a plurality of heating values, a plurality of pumping values as well as the fourth temperature value (T4) is stored in the control device (34).

8. Flow-type heater according to claim 7,
**characterized in that**
the control device (34) is adapted to adjust a lower heating value and/or a higher pumping value upon determination of a fourth temperature value (T4) above a first presettable threshold value for a presettable period of time and/or until decline of the fourth temperature value (T4) below a second presettable threshold value.

9. Flow-type heater according to any one of the preceding claims,
**characterized in that**
the control device (34) includes at least one power semiconductor component (36, 38), wherein the at least one power semiconductor component (36, 38) is thermally coupled to the flow pipe (14), in particular is disposed on the flow pipe (14).

10. Flow-type heater according to claim 9,
**characterized in that**
the heating power of the at least one power semiconductor component (36, 38) is taken into account in the dependencies stored in the control device (34).

11. Flow-type heater according to any one of claims 3 to 10,
**characterized in that**
the flow-type heater can be coupled to a display device, wherein the control device (34) is adapted to determine a degree of calcination of the flow pipe (14) considering the second (T2) and the third temperature value (T3), and if it exceeds a presettable threshold value, to control the display device for outputting a corresponding warning signal to a user.

12. Flow-type heater according to any one of the preceding claims,
**characterized in that**
the control device (34) is adapted to preheat the heating device (12a, 12b) according to a presettable power stage for a presettable period of time and/or until appearance of a presettable first temperature value (T1) before turning on the pumping device (30).

13. Flow-type heater according to any one of the preceding claims,
**characterized in that**
the dependencies in the control device (34) are stored as a family of characteristics, as a formula correlation or as a look-up table.

14. Household small equipment, in particular coffee machine, water heater, wash basin flow-type heater including a flow-type heater according to any one of the preceding claims.

15. Method for operating a flow-type heater for heating a fluid with at least one heating device (12a, 12b); at least one flow pipe (14) for guiding the fluid with an inflow (16) and an outflow (18), wherein the flow pipe (14) is thermally coupled to the at least one heating device (12a, 12b) and includes an inflow area (20), a center area (22) and an outflow area (24); at least a first temperature sensor (26) disposed in the inflow area (20) of the flow pipe (14); a pumping device (30) for pumping the fluid into the at least one flow pipe (14); and a control device (34) coupled to the heating device (12a, 12b), the pumping device (30) and the first temperature sensor (26);
including the following steps of:
a) determining a first temperature value (T1) in the inflow area (20) of the flow pipe (14) by means of the first temperature sensor (26) with the pumping device (30) turned off and the heating device (12a, 12b) turned off;
b) determining a second temperature value (T2) in the inflow area (20) of the flow pipe (14) by means of the first temperature sensor (26) in the operation of the pumping device (30) in a first presettable power stage and in the operation of the heating device (12a, 12b) in a first presettable power stage; and
c) controlling the heating device (12a, 12b) such that it is operated according to a dependency stored in the control device (34) of at least a set temperature (Tₛₒₗₗ) of the fluid at the outflow (18) of the flow pipe (14) on at least the first and the second determined temperature value (T1; T2), at least the first presettable power stage of the pumping device (30) and different heating values correlated with power stages of the heating device (12a, 12b), with a power stage resulting in the set temperature (Tₛₒₗₗ) of the fluid at the outlet of the flow pipe (14) according to the stored dependency at the adjusted power stage of the pumping device (30), wherein by the stored dependency for the at least one set temperature (Tₛₒₗₗ) and for a determined first and second temperature (T1; T2) it is determined, with which power stage the heating device (12a; 12b) is to be operated at the adjusted power stage of the pumping device (30).

## Revendications

1. Chauffe-eau instantané destiné au chauffage d'un fluide, avec
- au moins un dispositif de chauffage (12a, 12b) ;
- au moins un tube d'écoulement (14), destiné au guidage du fluide avec une entrée (16) et une sortie (18), tandis que le tube d'écoulement (14) est couplé thermiquement à au moins l'un des dispositifs de chauffage (12a, 12b) et comprend une zone d'entrée (20), une zone médiane (22) et une zone de sortie (24) ;
- au moins un premier capteur de température (26), qui est agencé dans la zone d'entrée (20) du tube d'écoulement (14) ;
- un dispositif de pompage (30), destiné au pompage du fluide dans au moins l'un des tubes d'écoulement (14) et
- un dispositif de commande (34), qui est couplé au dispositif de chauffage (12a, 12b), au dispositif de pompage (30) et au premier capteur de température (26) ;
**caractérisé en ce**
**que** le dispositif de commande (34) est conçu, avant le début d'un processus de chauffage, pour déterminer les valeurs suivantes :
- une première valeur de température (T1) dans la zone d'entrée (20) du tube d'écoulement (14) au moyen du premier capteur de température (26), en cas de dispositif de pompage (30) hors circuit et en cas de dispositif de chauffage (12a, 12b) hors circuit et
- une deuxième valeur de température (T2) dans la zone d'entrée (20) du tube d'écoulement (14) au moyen du premier capteur de température (26) en cas d'exploitation du dispositif de pompage (30) à un premier niveau de puissance prédéfinissable et en cas d'exploitation du dispositif de chauffage (12a, 12b) à un premier niveau de puissance prédéfinissable ;
tandis que, dans le dispositif de commande (34), la dépendance d'au moins une température théorique (T_{théo}) du fluide à la sortie (18) du tube d'écoulement (14) est établie par rapport à au moins la première valeur de température (T1), la deuxième valeur de température (T2), au moins au premier niveau de puissance prédéfinissable du dispositif de pompage (30) et à diverses valeurs calorifiques, corrélées à des niveaux de puissance du dispositif de chauffage (12a, 12b),
tandis que le dispositif de commande (34) est conçu pour amorcer le dispositif de chauffage (12a, 12b), de telle sorte que celui-ci est exploité avec un niveau de puissance, qui conduit, selon la dépendance établie, en cas de niveau de puissance réglé du dispositif de pompage (30), à la température théorique (T_{théo}) du fluide à la sortie du tube d'écoulement (14), tandis que, par le biais de la dépendance établie pour au moins l'une des températures théoriques (T_{théo}) et pour la première et deuxième valeur déterminée de température (T1 ; T2), il est déterminé avec quel niveau de puissance le dispositif de chauffage (12a, 12b) doit être exploité en cas de niveau de puissance réglé du dispositif de pompage (30).

2. Chauffe-eau instantané selon la revendication 1,
**caractérisé en ce**
**que** le chauffe-eau instantané comprend en outre un second capteur de température (28), qui est agencé dans la zone médiane ou de sortie du tube d'écoulement (14).

3. Chauffe-eau instantané selon une quelconque des revendications 1 ou 2,
**caractérisé en ce**
**que** le dispositif de commande (34) est conçu en outre pour déterminer, avant le début d'un processus de chauffage et avant la détermination de la deuxième valeur de température (T2), la valeur suivante :
- une troisième valeur de température (T3), en particulier dans la zone d'entrée (20) du tube d'écoulement (14), au moyen du premier capteur de température (26), dans la zone médiane ou de sortie du tube d'écoulement (14), au moyen du second capteur de température (28), en cas de dispositif de pompage (30) mis hors circuit et de dispositif de chauffage (12a, 12b) mis sous tension ;
tandis que le dispositif de commande (34) est conçu pour procéder, à partir de la première valeur de température (T1) et de la troisième valeur de température (T3), à un calibrage du dispositif de chauffage (12a, 12b), pour déterminer la relation entre les niveaux de puissance prédéfinissables du dispositif de chauffage (12a, 12b) et les valeurs calorifiques associées.

4. Chauffe-eau instantané selon la revendication 3,
**caractérisé en ce**
**que** le dispositif de commande (34) est conçu pour, avant la détermination de la troisième valeur de température (T3) par le biais d'un amorçage correspondant du dispositif de chauffage (12a, 12b), vider la vapeur du tube d'écoulement (14), à l'exception d'une quantité résiduelle du fluide prédéfinissable, ou pour renvoyer le fluide se trouvant dans le tube d'écoulement (14), dans un réservoir de fluide (32).

5. Chauffe-eau instantané selon une quelconque des revendications précédentes,
**caractérisé en ce**
**que** le dispositif de commande (34) est conçu pour procéder, à partir de la première (T1) et de la deuxième valeur de température (T2), à un calibrage du dispositif de pompage (30), pour déterminer la relation entre les niveaux de puissance du dispositif de pompage (30) prédéfinissables et les valeurs de pompage associées.

6. Chauffe-eau instantané selon une quelconque des revendications 2 à 5,
**caractérisé en ce**
**que** le dispositif de commande (34) est conçu pour déterminer, au moyen du second capteur de température (28), une quatrième valeur de température (T4), en cas de dispositif de chauffage (12a, 12b) mis sous tension et de dispositif de pompage (30) mis sous tension.

7. Chauffe-eau instantané selon la revendication 6,
**caractérisé en ce**
**que**, dans le dispositif de commande (34), la dépendance d'au moins une température théorique (T_{théo}) du fluide à la sortie (18) du tube d'écoulement (14) par rapport à la première valeur de température (T1), à la deuxième valeur de température (T2), à une multiplicité de valeurs calorifiques, à une multiplicité de valeurs de pompage, ainsi qu'à la quatrième valeur de température (T4), est établie.

8. Chauffe-eau instantané selon la revendication 7,
**caractérisé en ce**
**que** le dispositif de commande (34) est conçu, en cas de constatation d'une quatrième valeur de température (T4) par l'intermédiaire d'une première valeur seuil prédéfinissable pour une durée prédéfinissable et / ou jusqu'à la baisse de la quatrième valeur de température (T4) au-dessous d'une seconde valeur seuil prédéfinissable, pour régler une valeur calorifique plus basse et / ou une valeur de pompage plus élevée.

9. Chauffe-eau instantané selon une quelconque des revendications précédentes,
**caractérisé en ce**
**que** le dispositif de commande (34) comprend au moins un composant semi-conducteur de puissance (36, 38), tandis qu'au moins l'un des composants semi-conducteurs de puissance (36, 38) est couplé thermiquement au tube d'écoulement (14), en particulier agencé sur le tube d'écoulement (14).

10. Chauffe-eau instantané selon la revendication 9,
**caractérisé en ce**
**que**, dans les dépendances établies dans le dispositif de commande (34), la puissance calorifique d'au moins un des composants semi-conducteurs de puissance (36, 38) est prise en compte.

11. Chauffe-eau instantané selon une quelconque des revendications 3 à 10,
**caractérisé en ce**
**que** le chauffe-eau instantané est couplable à un dispositif d'affichage, tandis que le dispositif de commande (34) est conçu, en prenant en compte la deuxième (T2) et la troisième valeur de température (T3), pour déterminer un degré d'entartrage du tube d'écoulement (14) et, si celui-ci dépasse une valeur seuil prédéfinissable, pour amorcer le dispositif d'affichage, en vue de la délivrance d'un signal d'avertissement correspondant à un utilisateur.

12. Chauffe-eau instantané selon une quelconque des revendications précédentes,
**caractérisé en ce**
**que** le dispositif de commande (34) est conçu, avant la mise sous tension du dispositif de pompage (30), pour préchauffer le dispositif de chauffage (12a, 12b) selon un niveau de puissance prédéfinissable, pour une durée prédéfinissable et / ou jusqu'au réglage d'une première valeur de température (T1) prédéfinissable.

13. Chauffe-eau instantané selon une quelconque des revendications précédentes,
**caractérisé en ce**
**que** les dépendances sont établies, dans le dispositif de commande (34), en tant que champ de lignes caractéristiques, en tant que relation de formule ou en tant que tableau de recherche.

14. Petit appareil ménager, en particulier machine à café, chauffe-eau, chauffe-eau instantané pour lavabo, avec un chauffe-eau instantané selon une quelconque des revendications précédentes.

15. Procédé d'exploitation d'un chauffe-eau instantané, destiné au chauffage d'un fluide avec au moins un dispositif de chauffage (12a, 12b) ; au moins un tube d'écoulement (14), destiné au guidage du fluide avec une entrée (16) et une sortie (18), tandis que le tube d'écoulement (14) est couplé thermiquement à au moins l'un des dispositifs de chauffage (12a, 12b) et comprend une zone d'entrée (20), une zone médiane (22) et une zone de sortie (24) ; au moins un premier capteur de température (26), qui est agencé dans la zone d'entrée (20) du tube d'écoulement (14) ; un dispositif de pompage (30), destiné au pompage du fluide dans au moins l'un des tubes d'écoulement (14) et un dispositif de commande (34), qui est couplé au dispositif de chauffage (12a, 12b), au dispositif de pompage (30) et au premier capteur de température (26) ;
comprenant les étapes suivantes :
a) Détermination d'une première valeur de température (T1) dans la zone d'entrée (20) du tube d'écoulement (14) au moyen du premier capteur de température (26), en cas de dispositif de pompage (30) mis hors circuit et de dispositif de chauffage (12a, 12b) mis hors circuit ;
b) Détermination d'une deuxième valeur de température (T2) dans la zone d'entrée (20) du tube d'écoulement (14) au moyen du premier capteur de température (26), en cas d'exploitation du dispositif de pompage (30) à un premier niveau de puissance prédéfinissable et en cas d'exploitation du dispositif de chauffage (12a, 12b) à un premier niveau de puissance prédéfinissable et
c) Amorçage du dispositif de chauffage (12a, 12b) de telle sorte que celui-ci est exploité, selon une dépendance établie dans le dispositif de commande (34), au moins d'une température théorique (T_{théo}) du fluide à la sortie (18) du tube d'écoulement (14) par rapport à au moins la première et la deuxième valeur de température (T1 ; T2) déterminée, à au moins le premier niveau de puissance prédéfinissable du dispositif de pompage (30) et à différentes valeurs calorifiques, corrélées aux niveaux de puissance du dispositif de chauffage (12a, 12b), avec un niveau de puissance qui conduit, selon la dépendance établie dans le cas du niveau de puissance réglé du dispositif de pompage (30) à la température théorique (T_{théo}) du fluide à la sortie du tube d'écoulement (14), tandis qu'il est défini, par le biais de la dépendance établie pour au moins l'une des températures théoriques (T_{théo}) et pour une première et deuxième température (T1 ; T2) déterminée, avec quel niveau de puissance le dispositif de chauffage (12a, 12b) doit être exploité, en cas de niveau de puissance réglé du dispositif de pompage (30).
